(19) Europäisches Patentamt / European Patent Office / Office européen des brevets

(11) **EP 3 657 223 B1**

(12) **EUROPEAN PATENT SPECIFICATION**

(45) Date of publication and mention
of the grant of the patent:
**18.10.2023   Bulletin 2023/42**

(21) Application number: **18836113.3**

(22) Date of filing: **17.07.2018**

(51) International Patent Classification (IPC):
**G02B 6/036** $^{(2006.01)}$

(52) Cooperative Patent Classification (CPC):
**G02B 6/03627;** G02B 6/02214; G02B 6/0281

(86) International application number:
**PCT/JP2018/026698**

(87) International publication number:
**WO 2019/017324 (24.01.2019 Gazette 2019/04)**

(54) **OPTICAL FIBER AND METHOD FOR PRODUCING SAME**

GLASFASER UND VERFAHREN ZUR HERSTELLUNG DAVON

FIBRE OPTIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.07.2017   JP 2017139349
09.03.2018   JP 2018043636**

(43) Date of publication of application:
**27.05.2020   Bulletin 2020/22**

(73) Proprietor: **Fujikura Ltd.
Tokyo 135-8512 (JP)**

(72) Inventor: **MARUYAMA, Ryo
Sakura-shi
Chiba 285-8550 (JP)**

(74) Representative: **Plasseraud IP
66, rue de la Chaussée d'Antin
75440 Paris Cedex 09 (FR)**

(56) References cited:
WO-A1-2005/015303     WO-A1-2014/168822
JP-A- 2005 115 193      JP-A- 2005 202 440
JP-A- 2010 271 460      JP-A- 2016 518 620
US-A1- 2006 045 450     US-A1- 2016 209 585

## Description

Technical Field

The present invention relates to an optical fiber including a depressed layer between a core and a cladding. Further, the present invention relates to a manufacturing method of manufacturing such an optical fiber.
Priority is claimed on Japanese Patent Application No. 2017-139349, filed July 18, 2017, and Japanese Patent Application No. 2018-043636, filed March 9, 2018.

Background

Patent Document 1 discloses an optical fiber including a depressed layer between a core and a cladding. Patent Document 1 describes that an optical fiber can be realized having a bending loss that satisfies the International Telecommunication Union Telecommunication Standardization Sector (ITU-T) Recommendation G657.A1, which is an international standard for optical fibers, while maintaining a mode field diameter and limiting a connection loss with a general-purpose optical fiber to a small value, by optimizing a relative refractive index difference $\Delta^-$ of the depressed layer with respect to the cladding and optimizing a ratio rl/r2 of a radius r1 of the core to an outer circumference radius r2 of the depressed layer.
A mode field diameter (MFD) is represented by a definition formula (the following formula (1)) of Petermann II in the ITU-T Recommendation G650.1. Here, E(r) indicates the electric field intensity at a point to which the distance from a central axis of the optical fiber is r.

$$MFD = 2w = 2\sqrt{\frac{2\int_0^\infty E^2(r)\,rdr}{\int_0^\infty [dE(r)/dr]^2\,rdr}} \quad \cdots (1)$$

Further, the bending loss indicates an increase in loss when an optical fiber is wound around a mandrel or the like having a predetermined radius.
Further, Patent Document 2 discloses an optical fiber comprising a central core region having refractive index $\Delta 1$, an inner cladding region having an outer radius r2 > 17 microns and refractive index $\Delta 2$ and a second cladding region surrounding the inner cladding region having refractive index $\Delta 3$. The fiber profile segments may be arranged so that $\Delta 1 > \Delta 3 > \Delta 2$. The fiber may exhibit a profile volume, V2 of the inner cladding region, calculated between r1 and r2, is at least 30 % $\Delta micron^2$.
Patent Document 3 discloses an optical fiber comprising a core and a clad provided around the core. The optical fiber is characterized in that the dispersion slope at 1550 nm wavelength is in the range from -0.01 to 0.01 ps/nm$^2$/km, the absolute value of the dispersion at 1550 nm wavelength is in the range below 10 ps/nm/km, and the nonlinearity coefficient is in the range above $30 \times 10^{-10}$/W.
Patent Document 4 discloses an optical fiber including a core, and a clad surrounding an outer circumference of the core, in which a first relative refractive index difference $\Delta 1a$ is greater than 0, a second relative refractive index difference $\Delta 1b$ is greater than 0, the first relative refractive index difference $\Delta 1a$ is greater than the second relative refractive index difference $\Delta 1b$, the first relative refractive index difference $\Delta 1a$ and the second relative refractive index difference $\Delta 1b$ satisfy a relationship denoted by the following expression: $0.20 \leq /(\Delta 1a-\Delta 1b)/\Delta 1a \leq /0.88$. and a refractive index profile A of the core in an entire region of a section of $0 \leq r \leq /r1$ as a function $\Delta(r)$ of a distance r from a center of the core in the radial direction is denoted by the following expression: $\Delta(r) = \Delta 1a - (\Delta 1a - \Delta 1b) r/r1$.

Document of Related Art

Patent Document

[Patent Document 1] PCT International Publication No. WO 2016/047749

[Patent Document 2] WO2014/168822A1
[Patent Document 3] WO2005/015303A1
[Patent Document 4] US2016/209585A1

Summary

Technical Problem

Incidentally, in an optical fiber, it is necessary to consider dispersion characteristics in addition to the connection loss and the bending loss. For example, in the ITU-T Recommendation G652, it is recommended that a zero dispersion wavelength ZDW be 1300 nm or more and 1324 nm or less and that a zero dispersion slope be 0.073 ps/km/nm$^2$ or more and 0.092 ps/km/nm$^2$ or less. In consideration of manufacturing variation, it is preferable to design an optical fiber in which the zero dispersion wavelength is 1305 nm or more and 1319 nm or less.

However, an optical fiber including a depressed layer tends to have a zero dispersion wavelength less than that of an optical fiber including no depressed layer. In the optical fiber described in Patent Document 1, the zero dispersion wavelength may be less than 1305 nm. Therefore, in the optical fiber described in Patent Document 1, there remains room for improvement in the dispersion characteristics.

The zero dispersion wavelength denotes a wavelength at which the value of chromatic dispersion becomes zero. Here, the chromatic dispersion is the sum of material dispersion and waveguide dispersion. Further, the zero dispersion slope denotes a change rate of the chromatic dispersion with respect to a wavelength at the zero dispersion wavelength.

The present invention was made in view of the above problems, and an object thereof is to improve dispersion characteristics while obtaining both of low connection loss and low bending loss in an optical fiber having a depressed layer.

Solution to Problem

In order to solve the above problems, an optical fiber according to claim 1 is provided.

Additional embodiments of the optical fiber of claim 1 are defined in the dependent claims.

Effects

According to the present invention, it is possible to improve dispersion characteristics while obtaining both of low connection loss and low bending loss.

Brief Description of Drawings

FIG 1 is a view showing a structure of an examplary optical fiber. The portion (a) of FIG 1 is a cross-sectional view (left side) and a side view (right side) showing the structure of the optical fiber, and the portion (b) of FIG 1 is a graph showing a refractive index profile of the optical fiber.

FIG 2 is a graph showing a simulated actual refractive index profile and a graph showing an ideal refractive index profile determined according to definitions of the present disclosure.

FIG 3 is a graph showing a refractive index profile of an optical fiber (including no depressed layer) manufactured through a VAD method with a design goal in which the refractive index profile of a core is an $\alpha$ power distribution and the refractive index profile of a cladding is a uniform distribution, together with the refractive index profile that is the design goal.

FIG 4 is a graph showing $\alpha$ dependency of the zero dispersion wavelength ZDW and the zero dispersion slope of an optical fiber in which the refractive index profile of a core includes an $\alpha$ power distribution, the refractive index profile of a cladding includes a uniform distribution, and no depressed layer is provided.

FIG 5 is a graph showing a relationship between $|dS/d\alpha|$ and $\alpha$, and $|dS/d\alpha|$ represents the absolute value of rate of change of the zero dispersion slope with respect to $\alpha$.

FIG 6 is a graph showing a relationship between $|d(ZDW)/d\alpha|$ and $\alpha$, and $|d(ZDW)/d\alpha|$ represents the absolute value of rate of change of the zero dispersion wavelength with respect to $\alpha$.

Detailed Description

The nature of the invention is described in detail by reference to the drawings and by reference to various examples detailed below. The scope of the invention is defined by the claims, while the drawigns and examples are for illustration purposes only.

(Structure of Optical Fiber)

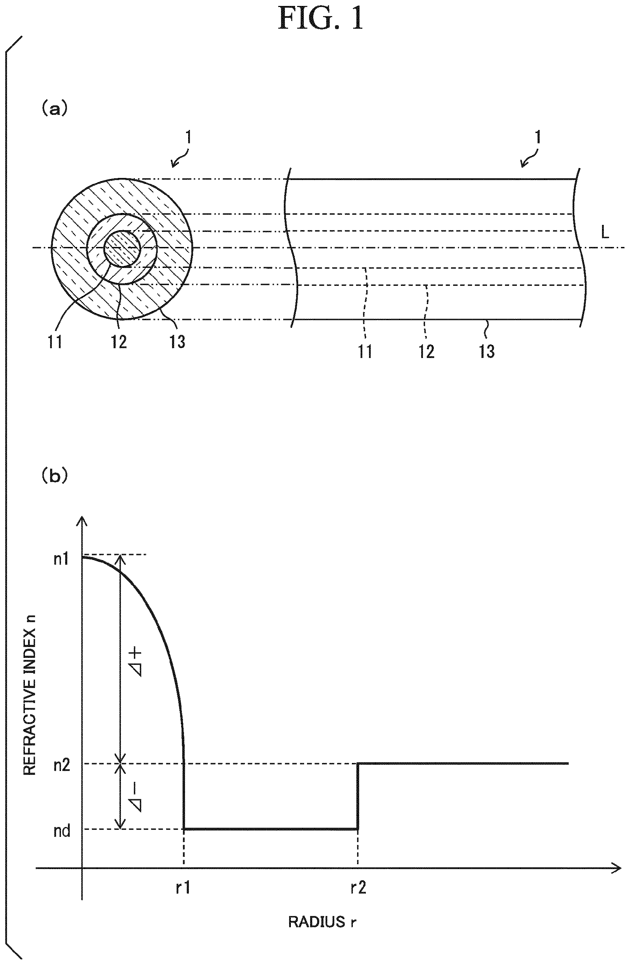

A structure of an optical fiber 1 is described with reference to FIG 1. In FIG 1, the portion (a) thereof is a cross-sectional view (left side) and a side view (right side) of the optical fiber 1, and the portion (b) thereof is a graph showing a refractive index profile of the optical fiber 1. A cross-sectional structure shown in the portion (a) of FIG 1 is common to cross-sections of the optical fiber 1 orthogonal to a central axis L of the optical fiber 1.

The optical fiber 1 is a columnar structure containing silica glass as a main component, and as shown in the portion (a) of FIG 1, includes a core 11 having a circular cross-section (having a radius rl), a depressed layer 12 having an annular cross-section (having an inner circumference radius r1 and an outer circumference radius r2) surrounding the core 11, and a cladding 13 having an annular cross-section (having an inner circumference radius r2 and an outer circumference radius r3) surrounding the depressed layer 12. The core 11 is an area to which an up-dopant such as germanium is added and which has a refractive index higher than that of the cladding 13, and the depressed layer 12 is an area to which a down-dopant such as fluorine is added and which has a refractive index lower than that of the cladding 13.

As shown in the portion (b) of FIG 1, the refractive index of the core 11 is approximated by an $\alpha$ power distribution. In other words, in the core 11, the refractive index $n(r)$ at a point to which the distance from the central axis L is r is approximated by $n(r) = n1[1-2\Delta^+(r/r1)^\alpha]^{1/2}$. Here, n1 represents the refractive index on the central axis L, and $\Delta^+$ represents the relative refractive index difference of the core 11 with respect to the cladding 13. In addition, when $\alpha$ is increased, the $\alpha$ power distribution gradually approaches a step-type refractive index profile in which the refractive index is constant.

As shown in the portion (b) of FIG 1, the refractive index of the depressed layer 12 is approximated by a uniform distribution. In other words, in the depressed layer 12, the refractive index $n(r)$ at a point to which the distance from the central axis L is r is approximated by $n(r) = nd$ (a constant). Further, as shown in the portion (b) of FIG 1, the refractive index of the cladding 13 is approximated by a uniform distribution. In other words, in the cladding 13, the refractive index $n(r)$ at a point to which the distance from the central axis L is r is approximated by $n(r) = n2$ (a constant). Among a maximum refractive index n1 of the core 11, the refractive index nd of the depressed layer 12, and the refractive index n2 of the cladding 13, the relationship of $nd < n2 < n1$ is satisfied.

In the following description, a relative refractive index difference $\Delta^+$ of the core 11 with respect to the cladding 13 is used instead of the maximum refractive index n1 of the core 11. Here, the relative refractive index difference $\Delta^+$ is an amount defined by $\Delta^+ = (n1^2-n2^2)/(2n1^2)\times100$ [%]. Further, in the following description, a relative refractive index difference $\Delta^-$ of the depressed layer 12 with respect to the cladding 13 is used instead of the refractive index nd of the depressed layer 12. Here, the relative refractive index difference $\Delta^-$ is an amount defined by $\Delta^- = (nd^2-n2^2)/(2nd^2)\times100[\%]$.

The refractive index profile of the optical fiber 1 is uniquely determined from the above-described constants $\alpha$, $\Delta^+$, $\Delta^-$, r1, and r2. Hereinafter, the five constants are referred to as "structural parameters" of the optical fiber 1.

The actual refractive index profile $n'(r)$ of the optical fiber 1 may not match the ideal refractive index profile $n(r)$ shown in the portion (b) of FIG 1. However, for the actual refractive index profile $n'(r)$ of the optical fiber 1, the structural parameters $\alpha$, $\Delta^+$, $\Delta^-$, r1, and r2 can also be defined according to the following procedure. The actual refractive index profile $n'(r)$ of the optical fiber 1 is accurately approximated by the ideal refractive index profile $n(r)$ that is determined from the structural parameters $\alpha$, $\Delta^+$, $\Delta^-$, r1, and r2 defined according to the following procedure.

Step 1: In the actual refractive index profile $n'(r)$ of the optical fiber 1, an average value in a range in which the refractive index of the cladding 13 is substantially constant is obtained, and the average value is set as the refractive index n2 of the cladding 13. For the calculation method of n2 of a substantially constant range, for example, the average value of $n(r)$ with respect to r within a range from 5.5 times to 6.5 times of the value of r0 described later is used.

Step 2: An area of a core to be approximated by an $\alpha$ power distribution is determined. With regard to the actual refractive index profile $n'(r)$, in the border between the core and the depressed layer, it may sometimes occur that $n(r)$ gently changes with respect to r. For example, in this border, $n(r)$ may gradually decrease as r increases. It is considered that this reason is that elements such as Ge or F doped in silica glass thermally diffuses in the manufacturing process of a preform using, for example, the VAD method. In such a refractive index profile, if the fitting is performed on an area including the border between the core and the depressed layer, the area may not be accurately approximated. On the other hand, if the fitting is performed on a core area except the border between the core and the depressed layer, the core area can be accurately approximated. Specifically, r obtaining the minimum value of a first derivative $dn'(r)/dr$ of $n'(r)$ with respect to r is determined and is set as r0. Next, an $\alpha$ power distribution, which best approximates (the square error is minimized) $n'(r)$ in a range in which $0 \leq r \leq r0$, is obtained, and values of n1 and $\alpha$ are determined.

Even in a case where n(r) is intentionally set to gently change with respect to r in the border between the core and the depressed layer by forming a preform using the CVD method (Chemical Vapor Deposition method), the configuration of this example including the above fitting method can be applied thereto.

With regard to rl, the minimum r obtaining n2 (namely, the average value in a range from n(r0 $\times$ 5.5) to n(r0 $\times$ 6.5)) is determined and is set as r1. In a range in which r0 < r < rl, for example, the actual refractive index profile may be used, or it may be defined as n(r) = n2 in the range. In addition, the method of obtaining n2 includes, for example, a method of taking sampling points at predetermined intervals in r0 $\times$ 5.5 $\le$ r $\le$ r0 $\times$ 6.5 and of calculating the average value of n'(r) at each sampling point. In this case, although the predetermined interval is not particularly limited, it is, for example, 0.5 $\mu$m or a value less than 0.5 $\mu$m.

Step 3: In the actual refractive index profile n'(r) of the optical fiber 1, a minimum value $n_{min}$ of n'(r) is obtained, and an average value $n_{ave}$ = $(n_{min}+n2)/2$ between the minimum value $n_{min}$ and the refractive index n2 is obtained. In the actual refractive index profile n'(r) of the optical fiber 1, a maximum r at which n'(r) = $n_{ave}$ is obtained, and this r is set as the outer circumference radius r2 of the depressed layer 12.

Step 4: The minimum r obtaining n'(r) = $n_{ave}$ is determined and is set as r4. In an area of r4 < r < r2, the average value of the actual refractive index profile n'(r) of the optical fiber 1 is obtained, and this average value is set as the refractive index nd of the depressed layer 12. The method of obtaining the average value includes, for example, a method of taking sampling points at predetermined intervals in r4 < r < r2 and calculating the average value of n'(r) at each sampling point. In this case, although the predetermined interval is not particularly limited, it is, for example, 0.5 $\mu$m or a value less than 0.5 $\mu$m.

Step 5: The relative refractive index difference $\Delta^+$ of the core 11 with respect to the cladding 13 is determined according to $\Delta^+$ = $(n1^2-n2^2)/(2n1^2)\times100$ [%] from the refractive index n2 of the cladding 13 determined in step 1 and the maximum refractive index n1 of the core 11 determined in step 2. Further, the relative refractive index difference $\Delta^-$ of the depressed layer 12 with respect to the cladding 13 is determined according to $\Delta^-$ = $(nd^2-n2^2)/(2nd^2)\times100$ [%] from the refractive index n2 of the cladding 13 determined in step 1 and the refractive index nd of the depressed layer 12 determined in step 4.

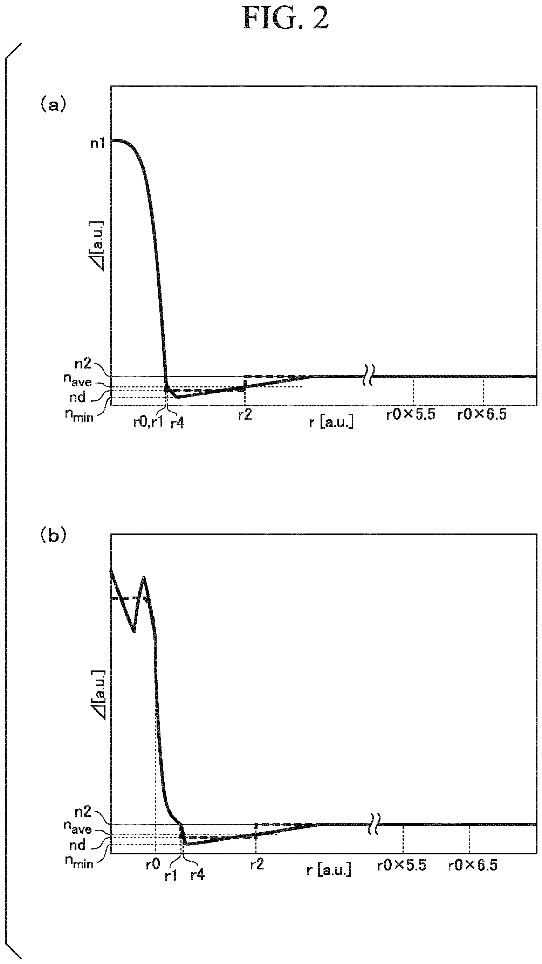

A graph shown by a solid line in FIG 2 indicates a simulated actual refractive index profile n'(r). The portion (a) of FIG 2 shows a refractive index profile in a case where r0 = r1, and the portion (b) of FIG 2 shows a refractive index profile in a case where r0 < r1. In each of these refractive index profiles, when the above-described procedure is applied to this refractive index profile n'(r), some structural parameters $\alpha$, $\Delta^+$, $\Delta^-$,rl, and r2 are determined. When the ideal refractive index profile n(r) having the structural parameters $\alpha$, $\Delta^+$, $\Delta^-$, r1, and r2 is plotted, a graph shown by a dotted line in FIG 2 is obtained. According to FIG 2, it can be confirmed that the actual refractive index profile n'(r) is accurately approximated by the ideal refractive index profile n(r) having the structural parameters $\alpha$, $\Delta^+$, $\Delta^-$, r1, and r2 determined according to the above procedure.

(Structural Parameters of Optical Fiber)

In the optical fiber 1 according to the claimed invention the index $\alpha$ of the refractive index profile of the core 11 satisfies the following condition (1).

$$3 \le \alpha \le 6 \quad \cdots \quad (1)$$

When the index $\alpha$ is set to be too great, the zero dispersion wavelength ZDW may be less than a lower limit value (for example, 1305 nm) of the allowable range. When the index $\alpha$ is set to 6 or less, such a situation does not easily occur. On the other hand, when the index $\alpha$ is set to be too small, it is impossible or difficult to manufacture, through a vapor-phase axial deposition method (VAD method), the optical fiber 1 having a refractive index profile close to a design goal and a situation in which the zero dispersion wavelength ZDW exceeds an upper limit value (for example, 1319 nm) of the allowable range may occur. When the index $\alpha$ is set to 3 or more, such situations do not easily occur.

The VAD method is a method of manufacturing a preform, which has excellent mass productivity and economy. Further, the VAD method is known to have excellent characteristics such that (1) the process thereof is simple, (2) it is possible to continuously manufacture a preform, and (3) it is easy to manufacture a large-size preform (Reference 1: Tatsuo Izawa et. al., "Research and Development of Vapor-phase Axial Deposition method (VAD method)", [online], Japan Society for the Promotion of Science, National Institute of Informatics, [Accessed June 26, 2017], Internet <URL: http://dbnst.nii.ac.jp/pro/detail/511]>). Therefore, about 60% of optical fibers for communication, which are produced worldwide, are produced through the VAD method (Reference 2: 2, 3 NTT Technical Journal, 2015. 9, Fujikura News, No. 408, 2015. 7). It is easy to manufacture a large-size preform through the VAD method because the VAD method is a manufacturing method of depositing soot in an axial direction of a preform. In contrast, it is difficult to manufacture a large-size preform through a Chemical Vapor Deposition method (CVD method) in which soot is deposited inside a hollow natural quartz tube in a radial direction.

However, in the VAD method, it is difficult to control the refractive index profile as compared with the CVD method. One cause of this is that, in the CVD method, soot is deposited and grown in the radial direction, whereas in the VAD method, soot is deposited and grown in the axial direction using one or two burners. However, when the shape and the position of a burner and the way in which a raw material and a fuel are supplied are optimized, it is possible to manufacture a preform that appropriately satisfies a specific refractive index profile (Reference 3: Katsuhiko Okubo, "Optical Fiber Technology in the ISDN Era", pp. 2-10 to 2-20, Rikogakusha Publishing Co., Ltd.). For example, in a case where the refractive index profile is an $\alpha$ power distribution, when the index $\alpha$ is 3 or more, it is possible to manufacture a preform that appropriately satisfies the refractive index profile.

In addition, the manufacturing method of this example is not limited to the VAD method, and an optical fiber of this example may be manufactured through another manufacturing method, for example, the CVD method.

In the optical fiber 1 according to the claimed invention the absolute value $|\Delta^-|$ of the relative refractive index difference $\Delta^-$ of the depressed layer 12 with respect to the cladding 13 satisfies the following condition (2), and it is further possible that the absolute value $|\Delta^-|$ satisfy the following condition (2').

$$0.01\% \leq |\Delta^-| \leq 0.045\% \quad \cdots \quad (2)$$

$$0.01\% \leq |\Delta^-| \leq 0.03\% \quad \cdots \quad (2')$$

When the absolute value of the relative refractive index difference $\Delta^-$ becomes too small, a situation may occur in which the bending loss exceeds the upper limit value of the allowable range thereof. When the absolute value of the relative refractive index difference $\Delta^-$ is set to 0.01% or more, such a situation does not easily occur. On the other hand, when the absolute value of the relative refractive index difference $\Delta^-$ becomes too great, the mode field diameter decreases, and as a result, a situation may occur in which the connection loss in connection to another optical fiber exceeds the upper limit value of the allowable range thereof. When the absolute value of the relative refractive index difference $\Delta^-$ is set to 0.045% or less, the possibility of occurrence of such a situation is decreased, and when the absolute value of the relative refractive index difference $\Delta^-$ is set to 0.03% or less, the possibility of occurrence of such a situation is further decreased.

Further, in the optical fiber 1 according to examples not necessarily falling under the scope of the claims, it is possible that the radius r1 of the core 11 and the outer circumference radius r2 of the depressed layer 12 be set such that a ratio rl/r2 satisfies the following condition (3), and it is further possible that the radius r1 and the outer circumference radius r2 be set such that the ratio rl/r2 satisfies the following condition (3').

$$0.2 \leq r1/r2 \leq 0.6 \quad \cdots \quad (3)$$

$$0.25 \leq r1/r2 \leq 0.55 \quad \cdots \quad (3')$$

When the ratio rl/r2 becomes too small, the mode field diameter decreases, and as a result, a situation may occur in which the connection loss in connection to another optical fiber exceeds the upper limit value of the allowable range. When the ratio rl/r2 is set to 0.2 or more, the possibility of occurrence of such a situation is decreased, and when the ratio rl/r2 is set to 0.25 or more, the possibility of occurrence of such a situation is further decreased. On the other hand, when the ratio rl/r2 becomes too great, a situation may occur in which the bending loss exceeds the upper limit value of the allowable range. When the ratio rl/r2 is set to 0.6 or less, the possibility of occurrence of such a situation is decreased, and when the ratio rl/r2 is set to 0.55 or less, the possibility of occurrence of such a situation is further decreased.

It is possible that the structural parameters $\alpha$, $\Delta^+$, $\Delta^-$, r1, and r2 be determined such that a cable cutoff wavelength $\lambda_{cc}$ of 22 m and the mode field diameters MFD at a wavelength of 1310 nm satisfy the following conditions (4) and (5), respectively, within a range specified by the above conditions (1), (2), and (3). Accordingly, it is possible to realize the optical fiber 1 that satisfies requirements specified in the ITU-T Recommendation G652.

$$\lambda_{cc} \leq 1260 \, \text{nm} \quad \cdots \quad (4)$$

$$8.6 \ \mu m \leq MFD \leq 9.5 \ \mu m \quad \cdots \quad (5)$$

The cutoff wavelength denotes a minimum wavelength at which a higher order mode (indicating an LP11 mode in this specification) is sufficiently attenuated. Specifically, the cutoff wavelength is a minimum wavelength at which a loss of a higher order mode becomes 19.3 dB. The cutoff wavelength includes a fiber cutoff wavelength and a cable cutoff wavelength and can be measured through, for example, a measurement method described in the ITU-T Recommendation G650.

As described above, in the optical fiber 1 of this example, the absolute value $|\Delta^-|$ of the relative refractive index difference $\Delta^-$ of the depressed layer 12 with respect to the cladding 13 is set to satisfy the above condition (2), and the radius r1 of the core 11 and the outer circumference radius r2 of the depressed layer 12 are set such that the ratio rl/r2 satisfies the above condition (3), whereby both low connection loss and low bending loss are obtained. Further, in the optical fiber 1 of this example, dispersion characteristics are improved by setting the refractive index profile of the core to be an $\alpha$ power distribution in which the index $\alpha$ is 6 or less. Further, in the optical fiber 1 of this example, it is possible to manufacture a preform through the VAD method by setting the refractive index profile of the core to be an $\alpha$ power distribution in which the index $\alpha$ is 3 or more.

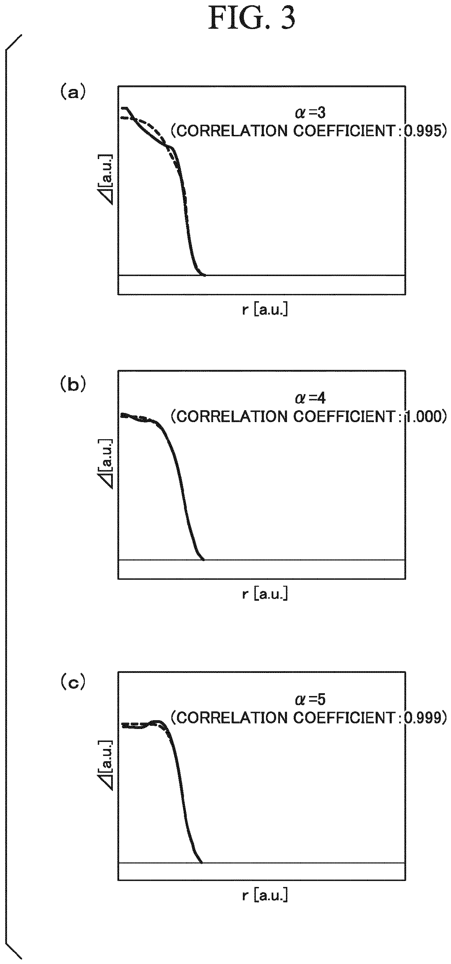

For reference, a graph is shown in FIG 3 showing a refractive index profile of an optical fiber manufactured through the VAD method with a design goal in which the refractive index profile of the core includes an $\alpha$ power distribution and the refractive index profile of the cladding includes a uniform distribution, together with the refractive index profile that is the design goal. In FIG 3, the portion (a) shows a refractive index profile in a case where the index $\alpha$ is approximately 3, the portion (b) shows a refractive index profile in a case where the index $\alpha$ is approximately 4, and the portion (c) shows a refractive index profile in a case where the index $\alpha$ is approximately 5. According to FIG 3, it can be confirmed that in a case where the index $\alpha$ is 3 or more, an optical fiber having a refractive index profile close to the design goal can be manufactured through the VAD method.

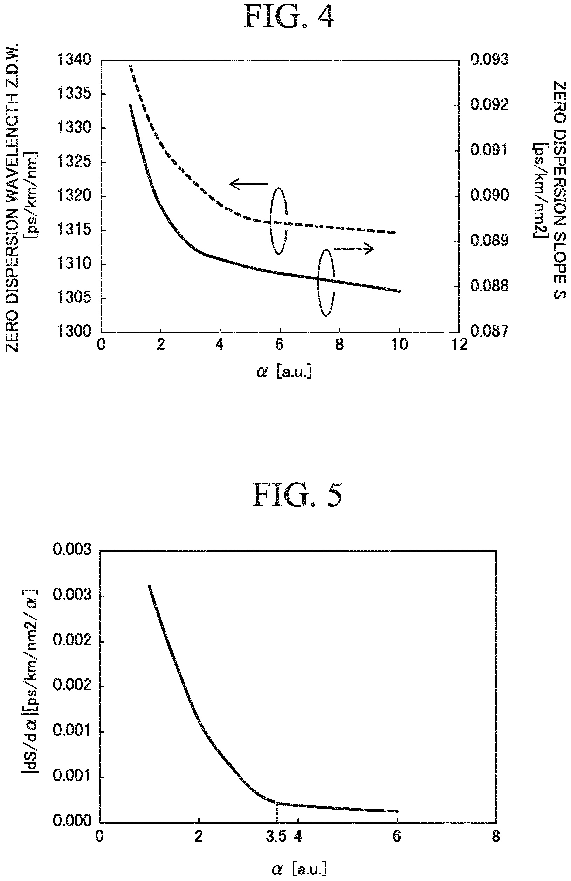

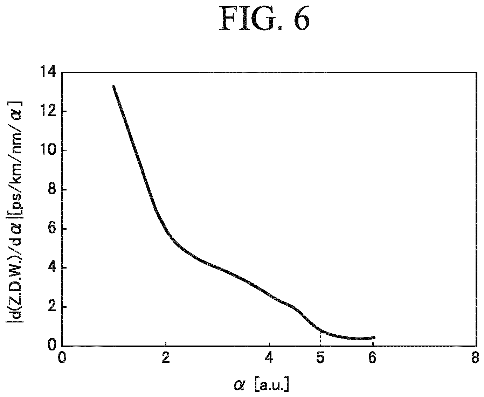

In addition, for reference, a graph is shown in FIG 4 indicating dependence of the zero dispersion wavelength ZDW and the zero dispersion slope on $\alpha$ when an MFD at a wavelength of 1.31 $\mu m$ is 9.1 $\mu m$ and a theoretical cutoff wavelength $\lambda$ct is 1.31 $\mu m$ in an optical fiber (including no depressed layer) in which the refractive index profile of the core is an $\alpha$ power distribution and the refractive index profile of the cladding is a uniform distribution. In FIG 4, the graph shown by a dotted line represents $\alpha$ dependency of the zero dispersion wavelength ZDW, and the graph shown by a solid line represents $\alpha$ dependency of the zero dispersion slope. Here, the theoretical cutoff wavelength $\lambda$ct is a theoretical minimum wavelength that cannot be propagated in a target mode. A mathematical definition of the theoretical cutoff wavelength $\lambda$ct is described in Reference 4 (Single Mode Fiber Optics, Jeunhomme, pp. 39-44, Marcel Dekker, New York, 1990). It can be confirmed from FIG 4 that the zero dispersion wavelength ZDW increases as the index $\alpha$ decreases. Further, it can be seen that the zero dispersion slope also exponentially increases as $\alpha$ decreases. If the central value of $\alpha$ is very small, the zero dispersion slope may steeply increase due to manufacturing variation, and the optical fiber may not satisfy the standards. FIG 5 shows a relationship between $|dS/d\alpha|$ and $\alpha$, and $|dS/d\alpha|$ represents the absolute value of rate of change of the zero dispersion slope with respect to $\alpha$. According to FIG 5, it can be seen that in an area close to $\alpha = 2$, $|dS/d\alpha|$ increases as $\alpha$ decreases. On the other hand, in an area in which $\alpha$ is comparatively large, $|dS/d\alpha|$ is small. In addition, when $\alpha$ is 3.5 or more, $|dS/d\alpha|$ converges. Therefore, it is possible that $\alpha$ is 3.5 or more in view of the controllability of the zero dispersion slope. By the same concept, there is a range of $\alpha$ in view of the zero dispersion wavelength. FIG 6 shows a relationship between $|d(ZDW)/d\alpha|$ and $\alpha$, and $|d(ZDW)/d\alpha|$ represents the absolute value of rate of change of the zero dispersion wavelength ZDW with respect to $\alpha$. According to FIG 6, $|d(ZDW)/d\alpha|$ decreases as $\alpha$ increases, and converges when $\alpha$ is 5 or more. Therefore, it is possible that $\alpha$ is 5 or more in view of the controllability of the zero dispersion wavelength.

(Practical Example)

Practical examples of the optical fiber 1 of this example are described with reference to Tables 1 and 2. In Table 1, No. 1 indicates a comparative example in which $\alpha = 6$ and r1/r2 > 0.6, No. 2 indicates a comparative example in which $\alpha = 4.8$ and rl/r2 < 0.2, No. 3 indicates a comparative example in which $\alpha = 4.8$ and $|\Delta^-|$ < 0.01%, No. 4 indicates a comparative example in which $\alpha = 4.8$ and $|\Delta^-|$ > 0.045%, No. 5 indicates a comparative example in which $\alpha = 6$ and $|\Delta^-|$ > 0.045%, Nos. 6 to 12 indicate comparative examples in which $\alpha < 3$, and Nos. 13 to 32 indicate practical examples in which $3 \leq \alpha \leq 6$. In Table 2, Nos. 33 to 58 indicate practical examples in which $3 \leq \alpha \leq 6$, and Nos. 59 to 67 indicate comparative examples in which $\alpha > 6$. In both of the practical examples and the comparative examples, the relative refractive index difference $\Delta^+$ is set to satisfy 0.30% $\leq \Delta^+$ < 0.45%. Examples 13-25, 29-43, 47-58 are according to the claimed invention, all other examples do not fall under the scope of claim 1.

The MAC value shown in Tables 1 and 2 is a value obtained by dividing the mode field diameter MFD at a wavelength of 1310 nm by the cable cutoff wavelength $\lambda_{cc}$.

[TABLE 1]

| No. | α | Δ+ [%] | Δ- [%] | r1/r2 | r1 [μm] | r2 [μm] | MFD at 1.31 [μm] | CABLE CUTOFF WAVELENGTH $\lambda_{cc}$ [μm] | MAC | ZERO DISPERSION WAVELENGTH Z.D.W [μm] | ZERO DISPERSION SLOPE S [ps/km/nm^2] | BENDING LOSS at 1.55 R=10mm [dB/turn] | BENDING LOSS at 1.55 R=15mm [dB/10turn] | BENDING LOSS at 1.625 R=10mm [dB/turn] | BENDING LOSS at 1.625 R=15mm [dB/10turn] |
|---|---|---|---|---|---|---|---|---|---|---|---|---|---|---|---|
| 1 | 6.0 | 0.355 | -0.045 | 0.7 | 5.08 | 7.25 | 9.05 | 1.163 | 7.78 | 1.310 | 0.085 | 0.81 | 0.04 | 1.55 | 0.22 |
| 2 | 4.8 | 0.405 | -0.025 | 0.15 | 4.95 | 33.00 | 8.59 | 1.250 | 6.87 | 1.313 | 0.086 | 0.21 | 0.01 | 0.66 | 0.12 |
| 3 | 4.8 | 0.370 | -0.005 | 0.4 | 5.10 | 12.75 | 906 | 1.160 | 7.81 | 1.314 | 0.087 | 0.92 | 0.03 | 1.60 | 0.19 |
| 4 | 4.8 | 0.380 | -0.050 | 0.4 | -5.30 | 13.25 | 8.91 | 1.192 | 7.47 | 1.303 | 0.089 | 0.26 | 0.02 | 0.81 | 0.15 |
| 5 | 6.0 | 0.395 | -0.050 | 0.4 | 4.90 | 12.25 | 858 | 1.160 | 7.40 | 1.306 | 0.087 | 0.25 | 0.02 | 0.80 | 0.15 |
| 6 | 2.5 | 0.420 | -0.030 | 0.3 | 5.85 | 19.50 | 8.96 | 1.255 | 7.14 | 1.311 | 0.088 | 0.22 | 0.02 | 0.72 | 0.13 |
| 7 | 2.5 | 0.400 | -0.020 | 0.3 | 5.78 | 19.25 | 9.08 | 1.216 | 7.47 | 1.314 | 0.088 | 0.26 | 0.03 | 0.82 | 0.17 |
| 8 | 2.5 | 0.390 | -0.020 | 0.4 | 5.90 | 14.75 | 9.23 | 1.220 | 7.57 | 1.312 | 0.089 | 0.30 | 0.03 | 0.91 | 0.18 |
| 9 | 2.5 | 0.390 | -0.030 | 0.3 | 5.85 | 19.50 | 9.16 | 1.203 | 7.61 | 1.311 | 0.088 | 0.25 | 0.03 | 0.78 | 0.18 |
| 10 | 2.5 | 0.380 | -0.020 | 0.5 | 5.75 | 11.50 | 9.22 | 1.171 | 7.87 | 1.315 | 0.087 | 0.41 | 0.05 | 0.69 | 0.23 |
| 11 | 2.5 | 0.415 | -0.010 | 0.6 | 5.79 | 9.65 | 9.03 | 1.194 | 7.57 | 1.316 | 0.087 | 0.28 | 0.02 | 0.92 | 0.15 |
| 12 | 2.5 | 0.420 | -0.040 | 0.6 | 5.64 | 9.40 | 8.80 | 1.197 | 7.35 | 1.315 | 0.087 | 0.29 | 0.02 | 0.92 | 0.16 |
| 13 | 3.0 | 0.405 | -0.040 | 0.6 | 5.70 | 9.50 | 8.96 | 1.211 | 7.40 | 1.308 | 0.088 | 0.25 | 0.02 | 0.84 | 0.14 |
| 14 | 3.0 | 0.420 | -0.010 | 0.6 | 5.79 | 9.65 | 9.02 | 1.199 | 7.52 | 1.310 | 0.088 | 0.20 | 0.02 | 0.65 | 0.13 |
| 15 | 3.5 | 0.380 | -0.040 | 0.5 | 5.65 | 11.30 | 9.12 | 1.224 | 7.45 | 1.305 | 0.091 | 0.27 | 0.02 | 0.85 | 0.16 |
| 16 | 3.5 | 0.395 | -0.040 | 0.5 | 5.56 | 11.11 | 8.96 | 1.223 | 7.33 | 1.306 | 0.089 | 0.26 | 0.02 | 0.81 | 0.14 |
| 17 | 3.5 | 0.400 | -0.020 | 0.5 | 5.35 | 10.70 | 8.87 | 1.220 | 7.27 | 1.313 | 0.087 | 0.27 | 0.02 | 0.85 | 0.15 |
| 18 | 3.5 | 0.385 | -0.010 | 0.5 | 5.56 | 11.11 | 9.15 | 1206 | 7.59 | 1.311 | 0.088 | 0.29 | 0.02 | 0.89 | 0.16 |
| 19 | 3.5 | 0.360 | -0.040 | 0.4 | 5.55 | 13.89 | 9.20 | 1.155 | 7.97 | 1.307 | 0.089 | 0.33 | 0.05 | 0.99 | 0.23 |
| 20 | 3.5 | 0.375 | -0.030 | 0.4 | 5.55 | 13.89 | 9.13 | 1.202 | 7.60 | 1.308 | 0.088 | 0.28 | 0.03 | 0.87 | 0.18 |
| 21 | 3.5 | 0.375 | -0.020 | 0.4 | 5.40 | 13.50 | 908 | 1.201 | 7.56 | 1.312 | 0.087 | 0.31 | 0.04 | 0.96 | 0.21 |
| 22 | 3.5 | 0.385 | -0.030 | 0.3 | 5.55 | 18.51 | 906 | 1.222 | 7.41 | 1.308 | 0.089 | 024 | 0.02 | 0.75 | 0.15 |

(continued)

| No. | α | Δ+ [%] | Δ- M | r1/r2 - | r1 [μm] | r2 [μm] | MFD at 1.31 [μm] | CABLE CUTOFF WAVELENGTH λcc [μm] | MAC | ZERO DISPERSION WAVELENGTH Z.D.W [μm] | ZERO DISPERSION SLOPE S [ps/km/nm^2] | BENDING LOSS at 1.55 R=10mm [dB/turn] | BENDING LOSS at 1.55 R=15mm [dB/10turn] | BENDING LOSS at 1.625 R=10mm [dB/turn] | BENDING LOSS at 1.625 R=15mm [dB/10turn] |
|---|---|---|---|---|---|---|---|---|---|---|---|---|---|---|---|
| 23 | 3.5 | 0.375 | -0.020 | 0.3 | 5.48 | 18.25 | 912 | 1.195 | 7.63 | 1.311 | 0.088 | 0.28 | 0.03 | 0.85 | 0.19 |
| 24 | 3.5 | 0.380 | -0.020 | 0.3 | 5.52 | 18.40 | 909 | 1.203 | 7.56 | 1.311 | 0.087 | 0.27 | 0.03 | 0.82 | 0.17 |
| 25 | 3.5 | 0.385 | -0.010 | 0.3 | 5.57 | 18.55 | 9.15 | 1.213 | 7.55 | 1.310 | 0.088 | 0.27 | 0.02 | 0.84 | 0.15 |
| 26 | 3.5 | 0.370 | -0.040 | 0.2 | 5.55 | 27.75 | 9.12 | 1.245 | 7.33 | 1.307 | 0.088 | 0.21 | 0.03 | 0.67 | 0.17 |
| 27 | 3.5 | 0.380 | -0.020 | 0.2 | 5.40 | 27.00 | 9.04 | 1.215 | 7.44 | 1.312 | 0.087 | 024 | 0.03 | 0.74 | 0.18 |
| 28 | 3.5 | 0.390 | -0.010 | 0.2 | 5.55 | 27.76 | 9.11 | 1.233 | 7.39 | 1.310 | 0.088 | 0.25 | 0.02 | 0.78 | 0.14 |
| 29 | 3.5 | 0.405 | -0.040 | 0.6 | 5.40 | 9.00 | 8.80 | 1.171 | 7.52 | 1.310 | 0.087 | 0.26 | 0.02 | 0.63 | 0.25 |
| 30 | 3.5 | 0.390 | -0.020 | 0.6 | 5.55 | 9.25 | 9.07 | 1.165 | 7.78 | 1.310 | 0.087 | 0.29 | 0.02 | 0.91 | 0.15 |
| 31 | 3.5 | 0.410 | -0.010 | 0.6 | 5.55 | 9.25 | 8.98 | 1.194 | 7.52 | 1.310 | 0.088 | 0.30 | 0.02 | 0.94 | 0.15 |
| 32 | 3.5 | 0.375 | -0.045 | 0.5 | 5.58 | 11.15 | 9.08 | 1.178 | 7.71 | 1.306 | 0.087 | 0.30 | 0.03 | 0.92 | 0.18 |
| - | - | [%] | M | - | [μm] | [μm] | [μm] | [μm] | | [μm] | [ps/km/nm^2] | [dB/turn] | [dB/10turn] | [dB/turn] | [dB/10turn] |
| 33 | 4.8 | 0.365 | -0.040 | 0.5 | 5.31 | 10.63 | 9.06 | 1.181 | 7.67 | 1.305 | 0.089 | 0.29 | 0.03 | 0.91 | 0.19 |
| 34 | 4.8 | 0.380 | -0.015 | 0.45 | 4.95 | 11.00 | 8.98 | 1.226 | 7.32 | 1.310 | 0.088 | 0.28 | 0.03 | 0.89 | 0.16 |
| 35 | 4.8 | 0.385 | -0.040 | 0.4 | 5.25 | 13.13 | 8.88 | 1.202 | 7.39 | 1.305 | 0.088 | 0.25 | 0.02 | 0.78 | 0.15 |
| 36 | 4.8 | 0.360 | -0.040 | 0.4 | 5.30 | 13.25 | 908 | 1.181 | 7.69 | 1.305 | 0.088 | 0.29 | 0.04 | 0.88 | 0.21 |
| 37 | 4.8 | 0.370 | -0.030 | 0.4 | 5.20 | 13.00 | 8.99 | 1.196 | 7.52 | 1.308 | 0.087 | 0.28 | 0.03 | 0.88 | 0.19 |
| 38 | 4.8 | 0.370 | -0.020 | 0.4 | 5.30 | 13.25 | 9.11 | 1.222 | 7.45 | 1.307 | 0.087 | 0.28 | 0.03 | 0.88 | 0.17 |
| 39 | 4.8 | 0.380 | -0.030 | 0.3 | 5.22 | 17.40 | 8.96 | 1.202 | 7.45 | 1.307 | 0.088 | 0.24 | 0.02 | 0.76 | 0.15 |
| 40 | 4.8 | 0.377 | -0.020 | 0.3 | 5.28 | 17.60 | 9.05 | 1.226 | 7.38 | 1.307 | 0.088 | 0.26 | 0.02 | 0.79 | 0.15 |
| 41 | 4.8 | 0.371 | -0.015 | 0.3 | 5.21 | 17.35 | 906 | 1.214 | 7.46 | 1.310 | 0.087 | 0.28 | 0.03 | 0.87 | 0.18 |
| 42 | 4.8 | 0.363 | -0.015 | 0.3 | 5.37 | 17.90 | 9.24 | 1.234 | 7.49 | 1.307 | 0.088 | 0.28 | 0.03 | 0.87 | 0.17 |
| 43 | 4.8 | 0.340 | -0.015 | 0.3 | 5.33 | 17.75 | 9.39 | 1.182 | 7.94 | 1.309 | 0.086 | 0.44 | 0.05 | 1.27 | 0.23 |
| 44 | 4.8 | 0.369 | -0.040 | 0.2 | 5.10 | 25.50 | 8.88 | 1.196 | 7.42 | 1.308 | 0.087 | 0.21 | 0.03 | 0.68 | 0.19 |

(continued)

| No. | α | Δ+ | Δ- | r1/r2 | r1 | r2 | MFD at 1.31 | CABLE CUTOFF WAVELENGTH $\lambda_{cc}$ | MAC | ZERO DISPERSION WAVELENGTH Z.D.W | ZERO DISPERSION SLOPE S | BENDING LOSS at 1.55 R=10mm | BENDING LOSS at 1.55 R=15mm | BENDING LOSS at 1.625 R=10mm | BENDING LOSS at 1.625 R=15mm |
|---|---|---|---|---|---|---|---|---|---|---|---|---|---|---|---|
| 45 | 4.8 | 0.375 | -0.020 | 0.2 | 5.30 | 26.50 | 9.07 | 1.254 | 7.23 | 1.307 | 0.087 | 0.23 | 0.02 | 0.72 | 0.15 |
| 46 | 4.8 | 0.375 | -0.020 | 0.2 | 5.20 | 26.00 | 9.01 | 1.244 | 7.24 | 1.308 | 0.087 | 0.28 | 0.03 | 0.88 | 0.18 |
| 47 | 4.8 | 0.380 | -0.040 | 0.6 | 5.22 | 8.70 | 8.91 | 1.154 | 7.72 | 1.307 | 0.087 | 0.31 | 0.03 | 0.95 | 0.16 |
| 48 | 4.8 | 0.375 | -0.020 | 0.6 | 5.28 | 8.80 | 9.07 | 1.177 | 7.71 | 1.308 | 0.087 | 0.32 | 0.03 | 0.99 | 0.16 |
| 49 | 4.8 | 0.395 | -0.010 | 0.6 | 5.34 | 8.90 | 902 | 1.245 | 7.25 | 1.309 | 0.088 | 0.21 | 0.02 | 0.69 | 0.13 |
| 50 | 6.0 | 0.370 | -0.020 | 0.3 | 5.09 | 16.95 | 9.01 | 1.218 | 7.40 | 1.307 | 0.087 | 0.26 | 0.03 | 0.82 | 0.16 |
| 51 | 6.0 | 0.365 | -0.020 | 0.4 | 5.00 | 12.50 | 8.99 | 1.183 | 7.60 | 1.310 | 0.087 | 0.30 | 0.03 | 0.93 | 0.20 |
| 52 | 6.0 | 0.385 | -0.030 | 0.4 | 5.00 | 12.50 | 8.80 | 1.193 | 7.38 | 1.307 | 0.087 | 0.26 | 0.02 | 0.80 | 0.15 |
| 53 | 6.0 | 0.373 | -0.010 | 0.4 | 506 | 12.65 | 9.03 | 1.190 | 7.59 | 1.309 | 0.088 | 0.29 | 0.03 | 0.89 | 0.16 |
| 54 | 6.0 | 0.376 | -0.020 | 0.2 | 5.00 | 25.00 | 8.91 | 1.219 | 7.31 | 1.309 | 0.087 | 0.23 | 0.02 | 0.73 | 0.15 |
| 55 | 6.0 | 0.355 | -0.020 | 0.3 | 5.25 | 17.50 | 9.24 | 1.220 | 7.57 | 1.305 | 0.088 | 0.28 | 0.03 | 0.85 | 0.18 |
| 56 | 6.0 | 0.340 | -0.020 | 0.3 | 5.25 | 17.50 | 9.36 | 1.190 | 7.87 | 1.306 | 0.088 | 0.33 | 0.05 | 0.98 | 0.22 |
| 57 | 6.0 | 0.370 | -0.010 | 0.6 | 5.25 | 8.75 | 9.19 | 1.222 | 7.52 | 1.306 | 0.086 | 0.30 | 0.02 | 0.95 | 0.15 |
| 58 | 6.0 | 0.390 | -0.040 | 0.6 | 5.16 | 8.60 | 8.86 | 1.216 | 7.28 | 1.305 | 0.087 | 0.22 | 0.02 | 0.74 | 0.14 |
| 59 | 10.0 | 0.355 | -0.020 | 0.3 | 4.95 | 16.50 | 9.14 | 1.220 | 7.49 | 1.304 | 0.088 | 0.27 | 0.03 | 0.85 | 0.17 |
| 60 | 10.0 | 0.340 | -0.010 | 0.2 | 5.00 | 25.00 | 9.36 | 1.243 | 7.53 | 1.304 | 0.088 | 0.29 | 0.04 | 0.88 | 0.20 |
| 61 | 10.0 | 0.345 | -0.030 | 0.4 | 5.00 | 12.50 | 9.19 | 1.191 | 7.72 | 1.302 | 0.089 | 0.30 | 0.04 | 0.92 | 0.20 |
| 62 | 10.0 | 0.365 | -0.020 | 0.4 | 4.70 | 11.75 | 8.88 | 1.188 | 7.47 | 1.310 | 0.086 | 0.30 | 0.03 | 0.93 | 0.19 |
| 63 | 10.0 | 0.380 | -0.020 | 0.3 | 4.80 | 16.00 | 8.85 | 1.245 | 7.11 | 1.306 | 0.087 | 0.25 | 0.02 | 0.79 | 0.14 |
| 64 | 10.0 | 0.335 | -0.020 | 0.3 | 4.95 | 16.50 | 9.33 | 1.193 | 7.82 | 1.304 | 0.089 | 0.43 | 0.05 | 0.69 | 0.23 |
| 65 | 10.0 | 0.335 | -0.020 | 0.3 | 4.88 | 16.25 | 9.23 | 1.173 | 7.87 | 1.307 | 0.088 | 0.42 | 0.05 | 1.23 | 0.23 |
| 66 | 10.0 | 0.355 | -0.010 | 0.6 | 4.80 | 8.00 | 9.10 | 1.220 | 7.46 | 1.310 | 0.086 | 0.38 | 0.03 | 1.16 | 0.19 |
| 67 | 10.0 | 0.360 | -0.020 | 0.6 | 4.95 | 8.25 | 9.12 | 1.194 | 7.64 | 1.304 | 0.086 | 0.32 | 0.03 | 0.99 | 0.24 |

above-described procedure, and characteristic values are shown in Tables 1 and 2.

According to Tables 1 and 2, it can be understood that the following characteristics (a) to (d) are obtained in all of the practical examples. In contrast, according to Table 1, in the comparative examples Nos. 1 and 3, since an increase in loss at a wavelength of 1550 nm when the optical fiber is wound around a cylindrical mandrel having a radius of 10 mm is greater than 0.75 dB/turn, and an increase in loss at a wavelength of 1625 nm when the optical fiber is wound around a cylindrical mandrel having a radius of 10 mm is greater than 1.5 dB/turn, required characteristics are not satisfied. In the comparative example Nos. 2 and 5, since the mode field diameter MFD at a wavelength of 1310 nm is less than 8.6 $\mu$m, required characteristics are not satisfied. In the comparative example No. 4, since the zero dispersion wavelength ZDW is less than 1305 nm, required characteristics are not satisfied. Since $\alpha$ = 2.5 in the comparative examples Nos. 6 to 12, it is impossible or difficult to manufacture an optical fiber through the VAD method. Further, according to Table 2, in the comparative examples Nos. 59, 60, 61, 64 and 67, since the zero dispersion wavelength ZDW is less than 1305 nm, required characteristics are not satisfied.

(a) The zero dispersion wavelength ZDW is 1305 nm or more and 1313 nm or less, and satisfies a requirement (1300 nm or more and 1324 nm or less) specified in the ITU-TG 652 with a margin of 5 nm with respect to the lower limit value and with a margin of 11 nm with respect to the upper limit value.

(b) The cable cutoff wavelength $\lambda_{cc}$ is 1254 nm or less, and satisfies a requirement (1260 nm or less) specified in the ITU-T Recommendation G652 with a margin of 6 nm.

(c) The mode field diameter MFD at a wavelength of 1310 nm is 8.8 $\mu$m or more and 9.4 $\mu$m or less, and satisfies a requirement (8.6 $\mu$m or more and 9.5 $\mu$m or less) specified in the ITU-T Recommendation G652 with a margin of 2 $\mu$m with respect to the lower limit value and with a margin of 1 $\mu$m with respect to the upper limit value.

(d) The bending loss satisfies the following requirements specified in the ITU-T Recommendation G657.Al.

- An increase in loss at a wavelength of 1550 nm when the optical fiber is wound around a cylindrical mandrel having a radius of 10 mm is less than 0.75 dB/tum.
- An increase in loss at a wavelength of 1625 nm when the optical fiber is wound around a cylindrical mandrel having a radius of 10 mm is less than 1.5 dB/tum.
- An increase in loss at a wavelength of 1550 nm when the optical fiber is wound around a cylindrical mandrel having a radius of 15 mm is less than 0.25 dB/10turn.
- An increase in loss at a wavelength of 1625 nm when the optical fiber is wound around a cylindrical mandrel having a radius of 15 mm is less than 1.0 dB/10turn.

In addition, according to Table 1, it is understood that some practical examples have the following characteristic (a') instead of the above characteristic (a).

(a') The zero dispersion wavelength ZDW is 1307 nm or more, and satisfies the requirement specified in the ITU-TG 652 with a margin of 7 nm with respect to the lower limit value.

(Additional Note)

The present invention is not limited to the above-described examples, various modifications can be performed within the scope of the claims, and embodiments obtained by appropriately combining various conditions disclosed herein are included in the technical range of the present invention.

Description of Reference Signs

1 optical fiber
11 core
12 depressed layer
13 cladding

**Claims**

1. An optical fiber (1), comprising:

   a core (11);
   a depressed layer (12) surrounding the core (11); and
   a cladding (13) surrounding the depressed layer (12),
   wherein:

   a refractive index profile (n(r)) of the core (11) comprises an a power distribution in which an index a is 3.5 or more and 6 or less,
   a relative refractive index difference $\Delta^-$ of the depressed layer (12) with respect to the cladding (13) is set such that an absolute value $|\Delta^-|$ thereof is 0.01% or more and 0.045% or less,
   a cable cutoff wavelength $\lambda_{cc}$ of 22 m is 1260 nm or less,
   a mode field diameter MFD at a wavelength of 1310 nm is 8.6 $\mu$m or more and 9.5 $\mu$m or less, and
   a zero dispersion wavelength ZDW is 1305 nm or more;

   **characterized in that** a radius r1 of the core (1) and an outer circumference radius r2 of the depressed layer (12) are set such that a ratio rl/r2 thereof is 0.3 or more and 0.6 or less.

2. The optical fiber (1) according to claim 1, wherein
   the refractive index profile (n(r)) of the core comprises an $\alpha$ power distribution in which an index a is 5 or more and 6 or less.

3. The optical fiber (1) according to claim 1 or 2, wherein
   the relative refractive index difference $\Delta^-$ is set such that the absolute value $|\Delta^-|$ thereof is 0.01% or more and 0.03% or less.

4. The optical fiber (1) according to any one of claims 1 to 3, wherein
   the radius r1 and the outer circumference radius r2 are set such that the ratio rl/r2 thereof is 0.3 or more and 0.55 or less.

5. The optical fiber (1) according to any one of claims 1 to 4, wherein
   a relative refractive index difference $\Delta^+$ of the core (11) with respect to the cladding (13) is set to be 0.30% or more and 0.45% or less.

6. The optical fiber (1) according to claim 1, wherein
   the zero dispersion wavelength ZDW is 1307 nm or more.

7. The optical fiber (1) according to any one of claims 1 to 6, wherein
   the mode field diameter MFD is 8.8 $\mu$m or more and 9.4 $\mu$m or less.

8. The optical fiber (1) according to any one of claims 1 to 7, wherein

   (1) an increase in loss at a wavelength of 1550 nm when the optical fiber is wound around a cylindrical mandrel having a radius of 10 mm is less than 0.75 dB/turn, (2) an increase in loss at a wavelength of 1625 nm when the optical fiber (1) is wound around a cylindrical mandrel having a radius of 10 mm is less than 1.5 dB/turn, (3) an increase in loss at a wavelength of 1550 nm when the optical fiber (1) is wound around a cylindrical mandrel having a radius of 15 mm is less than 0.25 dB/10turn, and (4) an increase in loss at a wavelength of 1625 nm when the optical fiber (1) is wound around a cylindrical mandrel having a radius of 15 mm is less than 1.0 dB/10turn.

9. A method of manufacturing the optical fiber (1) according to any one of claims 1 to 8, the method comprising the step of:
   manufacturing a preform for the optical fiber through a vapor-phase axial deposition (VAD) method.

**Patentansprüche**

1. Optische Faser (1), umfassend:

einen Kern (11);
eine vertiefte Schicht (12), welche den Kern (11) umgibt; und
eine Verkleidung (13), welche die vertiefte Schicht (12) umgibt,
wobei:

ein Brechungsindex-Profil (n(r)) des Kerns (11) eine $\alpha$-Leistungsverteilung umfasst, in welcher ein Index a 3,5 oder mehr und 6 oder weniger beträgt,
eine relative Brechungsindex-Differenz $\Delta^-$ der vertieften Schicht (12) bezüglich der Verkleidung (13) derart festgelegt ist, dass ein Absolutwert $|\Delta^-|$ davon 0,01% oder mehr und 0,045% oder weniger beträgt,
eine Kabel-Abschneidewellenlänge $\lambda_{cc}$ von 22 m 1260 nm oder weniger beträgt,
ein Modus-Felddurchmesser MFD bei einer Wellenlänge von 1310 nm 8,6 $\mu$m oder mehr und 9,5 $\mu$m oder weniger beträgt, und
eine Null-Dispersionswellenlänge ZDW 1305 nm oder mehr beträgt;

**dadurch gekennzeichnet, dass** ein Radius r1 des Kerns (1) und ein Außenumfangsradius r2 der vertieften Schicht (12) derart festgelegt sind, dass ein Verhältnis r1/r2 davon 0,3 oder mehr und 0,6 oder weniger beträgt.

2. Optische Faser (1) nach Anspruch 1, wobei
das Brechungsindex-Profil (n(r)) des Kerns eine $\alpha$-Leistungsverteilung umfasst, in welcher ein Index a 5 oder mehr und 6 oder weniger beträgt.

3. Optische Faser (1) nach Anspruch 1 oder 2, wobei
die relative Brechungsindex-Differenz $\Delta^-$ derart festgelegt ist, dass der Absolutwert $|\Delta^-|$ davon 0,01% oder mehr und 0,03% oder weniger beträgt.

4. Optische Faser (1) nach einem der Ansprüche 1 bis 3, wobei der Radius r1 und der Außenumfangsradius 2 derart festgelegt sind, dass das Verhältnis r1/r2 davon 0,3 oder mehr und 0,55 oder weniger beträgt.

5. Optische Faser (1) nach einem der Ansprüche 1 bis 4, wobei eine relative Brechungsindex-Differenz $\Delta^+$ des Kerns (11) bezüglich der Verkleidung (13) dazu festgelegt ist, 0,30% oder mehr und 0,45% oder weniger zu betragen.

6. Optische Faser (1) nach Anspruch 1, wobei
die Null-Dispersionswellenlänge ZDW 1307 nm oder mehr beträgt.

7. Optische Faser (1) nach einem der Ansprüche 1 bis 6, wobei der Modus-Felddurchmesser MFD 8,8 $\mu$m oder mehr und 9,4 $\mu$m oder weniger beträgt.

8. Optische Faser (1) nach einem der Ansprüche 1 bis 7, wobei

(1) eine Zunahme in einem Verlust bei einer Wellenlänge von 1550 nm, wenn die optische Faser um einen zylindrischen Dorn mit einem Radius von 10 mm gewickelt ist, weniger als 0,75 dB/Umlauf beträgt, (2) eine Zunahme in einem Verlust bei einer Wellenlänge von 1625 nm, wenn die optische Faser (1) um einen zylindrischen Dorn mit einem Radius von 10 mm gewickelt ist, weniger als 1,5 dB/Umlauf beträgt, (3) eine Zunahme in einem Verlust bei einer Wellenlänge von 1550 nm, wenn die optische Faser (1) um einen zylindrischen Dorn mit einem Radius von 15 mm gewickelt ist, weniger als 0,25 dB/10Umlauf beträgt, und (2) eine Zunahme in einem Verlust bei einer Wellenlänge von 1625 nm, wenn die optische Faser (1) um einen zylindrischen Dorn mit einem Radius von 15 mm gewickelt ist, weniger als 1,0 dB/10Umauf beträgt.

9. Verfahren zum Herstellen der optischen Faser (1) nach einem der Ansprüche 1 bis 8, wobei das Verfahren den Schritt umfasst:
Herstellen einer Vorform für die optische Faser durch ein Verfahren einer axialen Gasphasen-Abscheidung (VAD).

**Revendications**

1. Fibre optique (1), comprenant :

une âme (11) ;

une couche évidée (12) entourant l'âme (11) ; et
une gaine (13) entourant la couche évidée (12),
dans laquelle :

un profil d'indice de réfraction (n(r)) de l'âme (11) comprend une distribution de puissance $\alpha$ dans laquelle un indice $\alpha$ est supérieur ou égal à 3,5 et inférieur ou égal à 6,
une différence relative d'indice de réfraction $\Delta^-$ de la couche évidée (12) par rapport à la gaine (13) est réglée de sorte qu'une valeur absolue $|\Delta^-|$ de celle-ci soit supérieure ou égale à 0,01 % et inférieure ou égale à 0,045 %,
une longueur d'onde de coupure de câble $\lambda_{cc}$ de 22 m est inférieure ou égale à 1260 nm,
un diamètre de champ de mode, MFD, à une longueur d'onde de 1310 nm est supérieur ou égal à 8,6 $\mu$m et inférieur ou égal à 9,5 $\mu$m, et
une longueur d'onde de dispersion zéro, ZDW, est supérieure ou égale à 1305 nm ;
**caractérisée** ce qu'un rayon r1 de l'âme (1) et un rayon de circonférence extérieure r2 de la couche évidée (12) soient réglés de sorte qu'un rapport r1/r2 de ceux-ci soit supérieur ou égal à 0,3 et inférieur ou égal à 0,6.

2. Fibre optique (1) selon la revendication 1, dans laquelle
le profil d'indice de réfraction (n(r)) de l'âme comprend une distribution de puissance $\alpha$ dans laquelle un indice $\alpha$ est supérieur ou égal à 5 et inférieur ou égal à 6.

3. Fibre optique (1) selon la revendication 1 ou 2, dans laquelle la différence relative d'indice de réfraction $\Delta^-$ est réglée de sorte que la valeur absolue $|\Delta^-|$ de celle-ci soit supérieure ou égale à 0,01 % et inférieure ou égale à 0,03 %.

4. Fibre optique (1) selon l'une quelconque des revendications 1 à 3, dans laquelle le rayon r1 et le rayon de circonférence extérieure r2 sont réglés de sorte que le rapport r1/r2 de ceux-ci soit supérieur ou égal à 0,3 et inférieur ou égal à 0,55.

5. Fibre optique (1) selon l'une quelconque des revendications 1 à 4, dans laquelle une différence relative d'indice de réfraction $\Delta^+$ de l'âme (11) par rapport à la gaine (13) est réglée pour être supérieure ou égale à 0,30 % et inférieure ou égale à 0,45 %.

6. Fibre optique (1) selon la revendication 1, dans laquelle
la longueur d'onde de dispersion zéro, ZDW, est supérieure ou égale à 1307 nm.

7. Fibre optique (1) selon l'une quelconque des revendications 1 à 6, dans laquelle le diamètre de champ de mode, MFD, est supérieur ou égal à 8,8 $\mu$m et inférieur ou égal à 9,4 $\mu$m.

8. Fibre optique (1) selon l'une quelconque des revendications 1 à 7, dans laquelle (1) une augmentation de perte à une longueur d'onde de 1550 nm lorsque la fibre optique est enroulée autour d'un mandrin cylindrique présentant un rayon de 10 mm est inférieure à 0,75 dB/tour, (2) une augmentation de perte à une longueur d'onde de 1625 nm lorsque la fibre optique (1) est enroulée autour d'un mandrin cylindrique présentant un rayon de 10 mm est inférieure à 1,5 dB/tour, (3) une augmentation de perte à une longueur d'onde de 1550 nm lorsque la fibre optique (1) est enroulée autour d'un mandrin cylindrique présentant un rayon de 15 mm est inférieure à 0,25 dB/10 tours, et (4) une augmentation de perte à une longueur d'onde de 1625 nm lorsque la fibre optique (1) est enroulée autour d'un mandrin cylindrique présentant un rayon de 15 mm est inférieure à 1,0 dB/10 tours,

9. Procédé de fabrication de la fibre optique (1) selon l'une quelconque des revendications 1 à 8, le procédé comprenant l'étape consistant à :
Fabriquer une préforme pour la fibre optique par un procédé de dépôt axial en phase vapeur (VAD).

# FIG. 1

(a)

(b)

# FIG. 2

# FIG. 3

(a)

Δ[a.u.]

α=3
(CORRELATION COEFFICIENT: 0.995)

r [a.u.]

(b)

Δ[a.u.]

α=4
(CORRELATION COEFFICIENT: 1.000)

r [a.u.]

(c)

Δ[a.u.]

α=5
(CORRELATION COEFFICIENT: 0.999)

r [a.u.]

EP 3 657 223 B1

# FIG. 4

# FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017139349 A
- JP 2018043636 A
- WO 2016047749 A
- WO 2014168822 A1
- WO 2005015303 A1
- US 2016209585 A1

### Non-patent literature cited in the description

- Research and Development of Vapor-phase Axial Deposition method (VAD method). **TATSUO IZAWA.** Japan Society for the Promotion of Science. National Institute of Informatics, 26 June 2017
- *NTT Technical Journal,* 2015, 9
- *Fujikura News,* 2015, (408), 7
- **KATSUHIKO OKUBO.** Optical Fiber Technology in the ISDN Era. Rikogakusha Publishing Co., Ltd, 2-10, 2-20
- Single Mode Fiber Optics, Jeunhomme. Marcel Dekker, 1990, 39-44